(19) Europäisches Patentamt / European Patent Office / Office européen des brevets

(11) **EP 3 705 542 A1**

(12) **EUROPEAN PATENT APPLICATION**

(43) Date of publication:
**09.09.2020 Bulletin 2020/37**

(21) Application number: **19161226.6**

(22) Date of filing: **07.03.2019**

(51) Int Cl.:
*C09D 17/00* (2006.01)      *C09C 3/00* (2006.01)
*C09D 5/02* (2006.01)       *C09B 67/00* (2006.01)
*C09D 7/45* (2018.01)       *C08L 53/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Orion Engineered Carbons GmbH 60528 Frankfurt am Main (DE)**

(72) Inventors:
• **WAIDMANN, Guido 63934 Röllbach (DE)**
• **MOMPER, David 40229 Düsseldorf (DE)**
• **KIND, Angelika 40225 Düsseldorf (DE)**
• **VOGLER, Conny 53809 Ruppichteroth (DE)**
• **DETERS, David 53173 Bonn (DE)**

(74) Representative: **f & e patent Fleischer, Engels & Partner mbB, Patentanwälte Braunsberger Feld 29 51429 Bergisch Gladbach (DE)**

(54) **UNIVERSALLY DISPERSIBLE SOLID PIGMENT PREPARATION, PREPARATION AND USE THEREOF**

(57)   The present disclosure relates to a solid pigment preparation, comprising at least one pigment in an aqueous solution comprising an amine-functional acrylic block copolymer and an amine-functional polymeric dispersant comprising a polyoxyalkylene moiety, as well as a process for producing the solid pigment preparations and their use in various coloring applications. The solid pigment preparations are particularly universally dispersible in both water- and solvent-based systems. Corresponding dispersions are accordingly also within the scope of the present disclosure.

EP 3 705 542 A1

## Description

Field of the invention

The present invention relates to a solid pigment preparation, a process to produce the solid pigment preparations and their use in various coloring applications. The solid pigment preparations are particularly universally dispersible in both water- and solvent-based systems. Corresponding dispersions and colored materials are also within the scope of the invention.

Background of the invention

Pigments such as carbon black find wide-spread use for imparting color to a material, for example in plastic materials, paints, inks and coating compositions. Herein, the pigments must generally be uniformly and finely dispersed throughout the host material. It is therefore common to use the pigments in combination with dispersants, which facilitate dispersion of the pigment particles in an aqueous or organic carrier medium and/or stabilize the particles therein, e.g. reducing the tendency towards flocculation, sedimentation or agglomeration upon storage. Such pigment preparations can be provided in liquid or solid form and typically contain further additives such as stabilizers, defoamers, surfactants, rheology modifiers and/or anti-settling agents.

Solid pigment preparations, which are dispersible in liquid application media by stirring or shaking are of increasing interest due to their easier handling and higher actives content compared to liquid pigment preparations. Solid pigment preparations with comparable properties can however not be obtained by simply drying available liquid pigment preparations. A variety of different solid pigment preparations and dedicated processes for their production have accordingly been developed.

EP 2 234 708 B1 relates thus for example to a process for producing a solid pigment preparation which comprises the steps of atomizing a suspension, contacting the droplets formed by atomization with a gas stream having a predetermined temperature to dry the droplets and to obtain granules having a predetermined residual moisture content and separating the granules from the gas stream. The suspension comprises a solvent, a pigment, and a surface-active additive.

EP 1 517 934 B2 discloses for example granular solid pigment preparations that contain >10 wt.% up to 40 wt.% of an anionic surface-active additive based on acid phosphoric, phosphonic, sulfuric and/or sulfonic esters of polyalkylene oxides or of reaction products of alkylene oxides with aliphatic alcohols, with phenol or naphthol, with aliphatic or aromatic amines or with aliphatic carboxylic acids or carboxamides or salts thereof. Optionally, a nonionic surface-active additive based on polyethers may further be used in these solid pigment preparations.

Moreover, EP 1 565 531 B2 refers to solid pigment preparations comprising a water soluble anionic surface-active additive selected from the group of homo- and copolymers, after partial or full esterification with polyether alcohols or their singly tipped derivatives, of ethylenically unsaturated monocarboxylic acids and/or ethylenically unsaturated dicarboxylic acids with or without vinyl monomers comprising no acid function and salts of these homo- and copolymers. Nonionic surface-active additives based on polyethers are disclosed for optional use.

EP 1 913 095 B1 relates to solid pigment preparations comprising water-soluble surface-active additive(s) from the group of alkylene oxide group containing additive and alkylene oxide group free additives, and an antioxidant.

EP 2 350 210 B9 describes pigment granules comprising a pigment and a compound of the general formula $CH_3-(CH_2)_n-CH_2-O-[(CH_2)_p-O]_m-H$, with n = 8-18, p = 1-4 and m = 35-100.

The afore-mentioned solid pigment preparations available from the prior art are however usually only sufficiently dispersible and/or stable in either aqueous or solvent-borne media. Good coloration depends upon achieving a fine and uniform dispersion of the pigment particles in the respective medium. If the pigment particles are not optimally dispersed and stabilized in the application system, flocculation, sedimentation and so-called pigment spots, i.e. non-dispersed pigment agglomerates can occur leading to undesirable changes in the viscosity of the application system, as well as hue changes, losses of color strength, hiding power, luster, homogeneity, and brilliance. Moreover, even if useable with both aqueous and solvent-borne systems, the imparted coloristic properties such as hue, shade or color intensity of the prior art pigment preparations vary in general when the same pigment preparation is used for coloring different media. Thus, the processing industry is required to use and keep on storage a number of different solid pigment preparations for the different kinds of application media.

There is thus a need for a solid pigment preparation that is universally applicable for different kinds of application media. The pigment preparation should thus be easily and effectively dispersible with low energy input and/or shear forces in both water- and solvent-based application systems to yield stable dispersions and impart desirable color characteristics such as a high color strength, in particular high jetness. Ideally, the color characteristics imparted to both aqueous and solvent-based application systems should be comparable. The solid pigment preparations should be obtainable in an economic manner and be safe and user-friendly to handle.

Summary of the invention

It has now surprisingly been found that a solid pigment preparation comprising:

(a) at least one pigment;
(b) an amine-functional acrylic block copolymer and
(c) an amine-functional polymeric dispersant comprising a polyoxyalkylene moiety; provides such a universally applicable solid pigment preparation.

The present invention also relates to a process for preparing such a solid pigment preparation. The process comprises:

(i) dispersing at least one pigment in an aqueous solution comprising an amine-functional acrylic block copolymer and an amine-functional polymeric dispersant comprising a polyoxyalkylene moiety; and
(ii) drying of the dispersion to form the solid pigment preparation.

Furthermore, the present invention also relates to a dispersion comprising (a) at least one pigment, (b) an amine-functional acrylic block copolymer, (c) an amine-functional polymeric dispersant comprising a polyoxyalkylene moiety, and (d) a liquid aqueous or organic solvent-based carrier medium. Such dispersion can for example be obtained by the above described process for producing a solid pigment preparation according to the present invention before the drying step or by (re-)dispersing a solid pigment preparation of the present invention in an aqueous or organic solvent-based medium.
The present invention also relates to a process for coloration of a material, which comprises incorporating a solid pigment preparation or dispersion according to the present invention in said material, as well as to a colored material obtainable thereby.
The present invention also relates generally to the use of a combination of (i) an amine-functional acrylic block copolymer and (ii) an amine-functional polymeric dispersant comprising a polyoxyalkylene moiety for dispersing pigments.
It has surprisingly been found that the solid pigment preparations according to the present invention provide good dispersing behavior in both, water- and solvent-based systems, being universally applicable. The solid pigment preparations of the present invention can be easily dispersed at relatively low shear forces and low energy input to yield uniform dispersions with finely dispersed pigment particles regardless of the application medium. Besides good stir-in dispersibility in water as well as in organic solvents, the solid pigment preparations of the present invention provide high color strength and/or jetness. The color characteristics imparted to aqueous systems and to solvent-borne systems are comparable. Accordingly, one and the same solid pigment preparation can be used for tinting both aqueous and solvent-borne systems eliminating the need to store multiple solid pigment preparations to cover different application media. The dispersions obtainable from the solid pigment preparations of the present invention furthermore are stable exhibiting no or only a minimal tendency to flocculate, agglomerate or otherwise disintegrate. They can be easily and safely handled and metered by a user and be produced in an economic manner making use of established production technology.
Without intending to be bound by any theory, it is believed that the chemical nature of the amine-functional acrylic block copolymer and the amine-functional polymeric dispersant comprising a polyoxyalkylene moiety makes them not only individually suitable, but moreover complement one another to be particularly efficient when used in combination in dispersing and stabilizing pigments such as carbon black pigments in liquid media of different chemical composition and polarity including aqueous and organic solvent-based media.

Detailed description of the invention

In the following the present invention will be described in more detail. As used herein, the term "comprising" is understood to be open-ended and to not exclude the presence of additional undescribed or unrecited elements, materials, ingredients or method steps. The terms "including", "containing" and like terms are understood to be synonymous with "comprising". As used herein, the term "consisting of" is understood to exclude the presence of any unspecified element, ingredient or method step.
As mentioned above, the present invention relates a solid pigment preparation. The solid pigment preparation comprises (a) at least one pigment; (b) an amine-functional acrylic block copolymer; and (c) an amine-functional polymeric dispersant comprising a polyoxyalkylene moiety.
The solid pigment preparation according to the present invention thus comprises characteristically a combination of an amine-functional acrylic block copolymer and an amine-functional polymeric dispersant comprising a polyoxyalkylene moiety. This combination has been found to impart universal efficient dispersibility to the solid pigment preparations according to the present invention in both aqueous as well as organic solvent-based liquid media, superior to the performance of these components when used individually.

The term "amine-functional" as used herein refers to the presence of at least one amine functional group in the respective component. Amine functional groups include herein primary, secondary and tertiary amine functional groups as well as quaternary ammonium groups.

The amine-functional acrylic block copolymer that is used to prepare the solid pigment preparations according to the present invention and is contained therein can be any kind of block copolymer that contains amine functionality in the above sense and is made inter alia from acrylic monomers, i.e. acrylic acid, methacrylic acid (collectively referred to as (meth)acrylic acid) and derivatives thereof such as ester of (meth)acrylic acid like alkyl (meth)acrylates. As used herein, the term "block copolymer" means a polymer, which comprises two or more distinct (homo)polymer subunits ("blocks") which are linked by covalent bonding. For example, the block copolymer can comprise a diblock copolymer of the type, wherein a first block "A" derived from a first monomer or monomer mixture is bound to a second block "B" derived from a second monomer or monomer mixture that is different from the first monomer or monomer mixture. Other non-limiting examples include triblock polymers, e.g. of the type A-B-A. Typically, the amine-functional block copolymer used according to the present invention will contain one or more block(s) derived from an amine-functional monomer and one or more blocks derived from non-amine functional monomers such as alkyl (meth)acrylates. The block copolymers used according to the present invention can be obtained according to art recognized methods from suitable monomers, e.g. by free radical polymerization.

The amine-functional acrylic block copolymer used according to the present invention can preferably be a copolymer of at least vinylpyridine and one or more (meth)acrylate monomer(s), preferably including butylacrylate. The amine-functional acrylic block copolymer used according to the present invention preferably can have an amine value of at least 20 mg KOH/g, preferably at least 30 mg KOH/g. The amine value can be determined according to DIN 16945. The amine-functional acrylic block copolymer can have a weight average molecular weight $M_w$ of at least 15,000 g/mol, preferably of at least 20,000 g/mol. The weight average molecular weight $M_w$ can be determined by means of gel permeation chromatography using polystyrene standards for calibration. Suitable amine-functional acrylic block copolymers that can be used according to the present invention can be exemplified by Efka® PX 4300, Efka® PX 4310, Efka® PX 4320, Efka® PX 4330, Efka® PX 4340, Efka® PX 4700, Efka® PX 4701, Efka® PX 4702 and Efka® PX 4711, which are commercially available from BASF SE Formulation Additives.

As set forth above, according to the present invention an amine-functional polymeric dispersant comprising a polyoxyalkylene moiety is used in combination with the amine-functional acrylic block copolymer. The amine-functional polymeric dispersant comprising a polyoxyalkylene moiety that is used to prepare the solid pigment preparations according to the present invention and is contained therein can in principle comprise any polyoxyalkylene-based dispersant, which has amine functionality. The polyoxyalkylene moiety of the amine-functional polymeric dispersant can be obtained by polyaddition of alkylene oxides, preferably ethylene oxide, propylene oxide and butylene oxide to starter molecules, such as saturated or unsaturated aliphatic alcohols and aromatic alcohols, saturated or unsaturated aliphatic and aromatic amines, saturated or unsaturated aliphatic carboxylic acids, anhydrides and carboxamides as well as saturated or unsaturated aliphatic acyl chlorides. The alkylene oxides or starter molecules can have substituents comprising amine functionalities or functionalities which can be converted into amine functionalities. It is customary to use from 1 to 300 mol and preferably from 3 to 150 mol of alkylene oxide per mole of starter molecule. Suitable aliphatic alcohols comprise from 6 to 26 carbon atoms and preferably 8 to 18 carbon atoms and can have an unbranched, branched and cyclic structure. Suitable aromatic alcohols include phenol and naphthol, which can be substituted by alkyl, in particular $C_1$-$C_{12}$ alkyl, and vinyl. Suitable aliphatic amines correspond to the amine analogues of the abovementioned aliphatic alcohols. Examples of suitable aromatic amines are aniline and its derivatives. Useful aliphatic carboxylic acids include especially (meth)acrylic acids, saturated and unsaturated fatty acids and also polyfunctional carboxylic acids, e.g., dicarboxylic acids. Also, polymers with functional groups, which are reactive with alkylene oxides, such as amino, carboxy, hydroxy and/or thiol groups can be used as starting molecules. Such functionalized polymers can be obtained e.g. by radical polymerization from a mixture of ethylenically unsaturated monomers, which includes ethylenically unsaturated monomers having a respective functional group, e.g. (meth)acrylic acid or hydroxyalkyl (meth)acrylates. It is however also possible to use polyoxyalkylene-containing monomers such as polyoxyalkylene (meth)acrylate in the monomer mixture for obtaining the amine-functional polymeric dispersant comprising a polyoxyalkylene moiety. The polyoxyalkylene moiety of the dispersant may in particular comprise oxyethylene, oxypropylene and/or oxybutylene constitutional units. The polyoxyalkylene moiety of the amine-functional polymeric dispersant may for example be selected from the group consisting of polyoxyethylene, polyoxypropylene, and polyoxybutylene. Preferably, the dispersant comprises a polyoxyethylene moiety. The at least one polyoxyalkylene moiety can be present in the polymer backbone or as a side chain in the amine-functional polymeric dispersant. Amine functionality can be introduced by the use of amine-functional educts such as amine-functional alkylene oxides or starting molecules including polymers, or by post-modification. The amine-functionality can for example be introduced by converting a terminal alcohol end group of a pendant polyoxyalkylene moiety to an amine group containing moiety by addition of a suitable compound comprising a functional group which is reactive with an alcohol group, e.g. carboxylic acid, anhydrides and carboxamides, and an amine functional group, which can be protected. The amine-functional polymeric dispersant used according to the present invention may have an amine value of up to 30 or up to 20 mg KOH/g, such as in a range from 5 to 20 mg KOH/g. The amine value can be determined as described above. Suitable amine-functional polymeric polyoxyalkylene-functional dispersants that can be used according to the present invention are, for example, BYKJET-9150, BYKJET-9151, and BYKJET-9152 commercially available from BYK-Chemie GmbH.

The amine-functional acrylic block copolymer and the amine-functional polymeric dispersant comprising a polyoxyalkylene structure can be used in a total amount of at least 10 wt.%, such as at least 30 wt.%, at least 50 wt.%, at least 55 wt.%, at least 60 wt.%, at least 65 wt.%, at least 70 wt.%, at least 75 wt.%, at least 80 wt.%, at least 85 wt.%, or at least 90 wt%, based on the total weight of the pigment(s) in the solid pigment preparation. The amine-functional acrylic block copolymer and the amine-functional polymeric dispersant comprising a polyoxyalkylene structure can be used in a total amount of up to 200 wt.%, up to 150 wt.%, up to 120 wt.%, up to 115 wt.%, up to 110 wt.%, up to 105 wt.%, or up to 100 wt.% based on the total weight of the pigment(s) in the solid pigment preparation. Typically, the amine-functional acrylic block copolymer and the amine-functional polymeric dispersant comprising a polyoxyalkylene structure are used in a total amount in a range from 50-120 wt.%, preferably 70-100 wt.%, based on the total weight of the pigment(s) in the solid pigment preparation. It will be appreciated that any range between any of the explicitly disclosed lower and upper limit is herein disclosed.

The weight ratio of the amine-functional acrylic block copolymer and the amine-functional polymeric dispersant comprising a polyoxyalkylene moiety can vary. Typically, it is in a range from 1:99 to 80:20, such as from 5:95 to 70:30, preferably from 10:90 to 50:50, more preferably in the range of 10:90 to less than 30:70, such as from 10:90 to 25:75. Further exemplary ranges of the ratio of the amine-functional acrylic block copolymer and the amine-functional polymeric dispersant comprising a polyoxyalkylene structure according to the present invention may be from 10:90 to 35:65, from 10:90 to 30:70, from 10:90 to 25:75, 15:85 to 40:60, from 15:85 to 30:70, from 15:85 to 25:75, from 20:80 to 40:60, from 20:80 to 35:65, from 20:80 to 25:75, from 25:75 to 40:60, from 25:75 to 35:65, or from 25:75 to 30:70.

The pigment used in the solid pigment preparations of the present invention may comprise any kind of organic or inorganic pigment known in the art. Mixtures of two or more pigments can likewise be employed.

According to the present invention, the pigment may in particular comprise a black pigment. Preferably, the pigment used according to the present invention comprises a carbon black. The carbon black used may be any kind of carbon black known in the art such as a furnace black, a gas black, a channel black, a lamp black, a thermal black, an acetylene black, a Si-containing black, e.g. known from WO 98/45361 or DE 19613796, an inversion black, e.g. known from DE 19521565, a metal-containing black, e.g. known from WO 98/42778, or a light-arc black as well as carbon blacks which are by-products of chemical processes.

In particular, the pigment used according to the present invention may comprise an oxidized carbon black. Herein, the term "oxidized carbon black" refers to carbon blacks that have been subjected to an oxidation treatment and that feature surface-bound polar, ionic or ionizable groups, such as alcohol, phenol, lactole, quinone, ketone, anhydride, lactone, peroxidic, ether and/or carboxylic acid groups. Exemplary oxidizing agents include oxygen gas; peroxides such as hydrogen peroxide; persulfates such as sodium and potassium persulfates; hypohalites such as sodium hypochlorite; nitric acid; and transition metal-containing oxidants such as permanganate salts, osmium tetroxide, chromium oxides, ceric ammonium nitrates; and mixtures thereof.

A carbon black used as pigment according to the present invention can for example have a statistical thickness surface area (STSA) of $\leq$ 500 m$^2$/g, preferably in a range of 200 - 450 m$^2$/g, more preferably in a range of 350 - 400 m$^2$/g. The STSA can be determined according to ASTM D 6556 (2004). The carbon black may have an oil absorption number (OAN) in a range of 50 - 150 mL/100 g, preferably in a range of 70 - 130 mL/100g. The OAN of carbon black can be determined according to ASTM D2414 (2000). A carbon black used according to the present invention can have a volatile matter content of $\leq$ 25 %, preferably in a range of 1 - 25 %, more preferably in a range of 2 - 15 %. The volatile matter content can be determined according to DIN 53552.

The solid pigment preparations according to the present invention may optionally further comprise one or more common additive(s) such as a biocide, humidifier, wetting agent, flow assistant, rheological modifier, anti-settling agent or defoamer. Such additives, if any, are typically used in amounts in a range from 0 wt.% to 5 wt.%, based on the total weight of the pigment(s) in the solid pigment preparation.

The solid pigment preparation may for example comprise one more biocide(s) such as a preservative, insecticide, disinfectant, and/or pesticide. Suitable examples for biocides include 5-chlor-2-methyl-2H-isothiazolin-3-one, 2-methyl-2H-isothiazolin-3-one, 1,2-benzothiazol-3-one, 2-n-octyl-4-isothiazolin-3-one, tetramethylolacetylene diurea, diiodomethyl-p-tolyl sulfone, dodecylguanidine hydrochloride, 3-iodo-2-propynyl butyl carbamate, Acticide® (Thor Chemie), PROXEL® GXL Preservative (Lonza Ltd.), PROXEL® LS Preservative (Lonza Ltd.), and KORDEK™ (Dow Chemical). The biocide(s), if used, can be employed in an amount of 0 wt.% to 5 wt.%, preferably 0.1 wt.% to 3 wt.%, based on the total weight of the pigment(s).

The solid pigment preparation may also comprise a humidifier. Suitable examples for humidifiers include polyalcohols such as glycerine, polyethylenglycol (PEG), and polypropylenglycol (PPG). The humidifier can be employed in an amount of 0 wt.% to 5 wt.%, preferably 0.1 wt.% to 3 wt.%, based on the total weight of the pigment(s).

The solid pigment preparation of the present invention may moreover comprise for example a wetting agent. Suitable examples for wetting agents include METOLAT® (Munzing Chemie GmbH), DISPERBYK-190 (BYK-Chemie GmbH), ADDAPT® BioWet™ 25 (ADDAPT Chemicals B.V.), and Borchi® Gen 0650 (Borchers GmbH). The optional wetting agent can be used in an amount of 0 wt.% to 5 wt.%, preferably 0.1 wt.% to 3 wt.%, based on the total weight of the pigment(s).

The solid pigment preparation of the present invention may optionally also comprise an anti-settling agent. Suitable examples for anti-settling agents include silicas such as AEROSIL® R972 (Evonik Resource Efficiency GmbH). The optional anti-settling agent can be used in an amount of 0 wt.% to 5 wt.%, preferably 0.1 wt.% to 3 wt.%, based on the total weight of the pigment(s).

The solid pigment preparation may also comprise a rheological modifier. Suitable examples for rheological modifiers include polyalcohols, polyurethanes such as Rheovis® PU (BASF SE) and Coapur™ (Arkema Group), polyethers such as Rheovis PE (BASF SE), silicas such as SIPERNAT® (Evonik Resource Efficiency GmbH), and cellulose ethers such as METHOCEL™ (DOW Pharma and Food). The optional rheological modifier may be used in an amount of 0 wt.% to 5 wt.%, preferably 0.1 wt.% to 3 wt.% of, based on the total weight of the pigment(s).

The solid pigment preparation may optionally comprise a defoamer. Suitable examples for defoamers include silicon-based defoamers such as TEGO® Foamex 8050 (Evonik Resource Efficiency GmbH) and TEGO® Foamex 810 (Evonik Resource Efficiency GmbH), silicone-free polymer defoamers such as TEGO® Foamex 830 (Evonik Resource Efficiency GmbH) and Surfynol® 104E (Evonik Resource Efficiency GmbH), star-polymer-based defoamers such as FoamStar ST (BASF SE), and mineral oil defoamers such as BYK-030 (BYK-Chemie GmbH). The defoamer can be used in an amount of 0 wt.% to 5 wt.%, preferably 0.1 wt.% to 3 wt.%, based on the total weight of the pigment(s).

The solid pigment preparations according to the present invention can for example be prepared according to the above-mentioned process, which comprises dispersing the at least one pigment in an aqueous solution that comprises an amine-functional acrylic block copolymer, an amine-functional polymeric dispersant comprising a polyoxyalkylene moiety and optionally one or more of the optional additional ingredients mentioned above; and drying of the dispersion to form the solid pigment preparation.

The term "aqueous" as used herein means that the respective medium is based on water as a major component, such as comprising at least at 50 wt.% of water, based on the total weight of the solvents used in the medium. For example, the aqueous solution can be a solution that contains water as solvent in an amount of at least 50%, at least 60%, at least 70%, at least 80%, at least 90% or at least 95 % by weight based on the total weight of solvents of the aqueous solution. For example, water may be used as the only solvent, i.e. the solvent of the aqueous solution consists of water (100 wt.%). Alternatively, the aqueous solution used in the process according to the present invention for preparing a solid pigment preparation may comprise one or more organic solvent(s) in addition to water. Suitable organic solvents are for example monohydric or polyhydric alcohols, glycols, ketones, esters, glycerin or combinations thereof. The aqueous solution of the present invention may comprise from 0 wt.% to less than 50 wt.%, such as up to 40 wt.%, up to 30 wt.%, up to 20 wt.%, up to 10 wt.% or up to 5 wt.%, of organic solvents, based on the total weight of the solvents (incl. water) of the aqueous solution. Preferably, the aqueous solution comprises from 0 to 5 wt.%, such as 0.1 wt.% to 3 wt.%, of organic solvent(s), based on the total weight of the solvents (incl. water) of the aqueous solution.

The aqueous solution comprising the amine-functional acrylic block copolymer, the amine-functional polymeric dispersant comprising a polyoxyalkylene moiety and any optional component as set forth above that is used in the process according to the present invention can be prepared in various ways. For example, the amine-functional acrylic block copolymer can first be dissolved in the aqueous carrier and subsequently the amine-functional polymeric dispersant comprising a polyoxyalkylene moiety be added or vice versa. Preferably, the amine-functional acrylic block copolymer is premixed with water (and optional organic solvents, if used) and then added to the amine-functional polymeric dispersant comprising a polyoxyalkylene moiety to prepare the aqueous solution for dispersing the pigment. Further optional additives as described above such as a biocide, a humidifier, a wetting agent, a flow assistant, a rheological modifier, an anti-settling agent and/or a defoamer can be added to the aqueous phase before or after the addition of the amine-functional acrylic block copolymer and/or the amine-functional polymeric dispersant comprising a polyoxyalkylene moiety. Preferably, the optional additives are added to the aqueous solution after the addition of the amine-functional acrylic block copolymer and the amine-functional polymeric dispersant comprising a polyoxyalkylene moiety.

One or more pigments are then dispersed in the aqueous solution comprising the amine-functional acrylic block copolymer, the amine-functional polymeric dispersant comprising a polyoxyalkylene moiety and any optional component, if present.

The pigment is typically dispersed in the aqueous solution in an amount in a range from 10 to 70 wt.%, such as from 10 to 50 wt.%, or from 10 to 30 wt.%, more preferably from 12 to 28 wt.%, even more preferably 15 to 25 wt.%, most preferably 18 to 23 wt.%, and in particular 20 to 22 wt.%, based on the total weight of the dispersion.

The dispersing may be carried out by any means known in the art, for example using a bead mill, planetary mill, ultrasound, stirring and mixing elements, a dissolver, a shaker mixer, for example a Skandex mixer, rotor-stator dispersing assemblies, for example an Ultra-Turrax, or high-pressure homogenizers. The dispersing is generally conducted until the pigment component is homogeneously dispersed in the aqueous solution.

Optionally, the pH of the dispersion can be adjusted. For example, the pH of the dispersion can be controlled to be alkaline, for example in a range from 8 to 12 or from 8.5 to 11.0 such as from 8.5 to 10.5, from 8.5 to 10.0, from 8.5 to 9.8, from 9.0 to 11.0, from 9.0 to 10.0, from 9.0 to 9.8, from 9.5 to 11.0, from 9.5 to 10.5, from 9.3 to 9.8, from 9.3 to 11.0, from 9.3 to 10.5 or from 9.3 to 10.0 or to a range between any of the recited values. Control of the pH in the manufacture of the solid pigment preparation, e.g. to any of the afore-mentioned ranges, may maintain a proper balance of the acid and base forms of functional groups present on the above-mentioned dispersants, such as amine and protonated amine groups.

It is to be understood that a desirable pH of the dispersion may in some cases be attained already by the above-mentioned components used to prepare the aqueous solution and/or the pigment(s). Otherwise, the pH may be adjusted to a desired value or range by addition of an acid or base. The acid or base can be included at any stage prior to the drying step, for example in the preparation of the aqueous solution comprising the amine-functional polymeric dispersant comprising a polyoxyalkylene moiety and the amine-functional acrylic block copolymer, during the dispersing of the pigment(s) in said solution or thereafter.

Any kind of conventional acid or base may be used for adjustment of the pH. The pH of the dispersion can for example be adjusted by addition of a volatile base. The term "volatile base" refers to a base that is readily vaporizable having a vapor pressure of $p \geq 0.01$ kPa at 20 °C. Suitable volatile bases that can be used according to the present invention include for example amino alcohols such as 2-amino-2-methyl propanol, 2-dimethyl-amino ethanol, 2-amino-2-methyl-1,3-propanediol, 2-amino-1-butanol, diethylethanolamine, 2-(diisopropylamino)ethanol, and 2-(dibutylamino)ethanol; or amines such as triethylamine; diisopropylamine or an aqueous ammonia solution. The pH of the dispersion can for example be measured with a pH meter such as a Metrohm 780 instrument.

As set forth above, the dispersion of the pigment(s) in the aqueous solution is then dried to form the solid pigment preparation therefrom.

The dispersion may be dried using any known drying technique such as for example by spray drying, vacuum distillation, freeze drying, infrared drying, microwave drying, oven drying, drying using a rotating drum dryer or a combination of any of the foregoing. Preferably, the dispersion may be dried by spray drying.

Spray drying may be carried out in a spray dryer with nozzle atomization and with concurrent, half-countercurrent (fountain atomization) or countercurrent gas routing. Spray drying may for example be carried out as described in EP 2 234 708 B1.

The obtained dried solid pigment preparation may have a residual moisture content of 0 wt.% to 20 wt.%, preferably 0.1 wt.% to 5 wt.%, based on the total weight of the solid pigment preparation. The residual moisture content can be measured according to DIN ISO 787-2.

The dried material can optionally be subjected to further processing such as grinding, crushing, milling or alike. The solid pigment preparation according to the present invention can generally be provided in different physical forms, e.g. as a powder or granulate. In particular, the solid pigment preparation of the present invention may be flowable, preferably a flowable granular composition. Herein, the term "flowable granular composition" relates to solid pigment preparations comprising pigment granules being present in finely divided form.

Accordingly, the pigment granules preferably have a mass-weighted median particle size in the range of from 1 to 3000 μm. The mass-weighted median particle size of the pigments can be determined by laser diffraction spectroscopy based on ISO 13320-1. The determination can be carried out using a HELOS laser diffraction spectrometer from Sympatec, dispersing the pigment granules with a dispersing air pressure of 1 bar and evaluating the particle size distribution in accordance with Fraunhofer theory.

As mentioned previously, it is a characteristic advantage of the solid pigment preparations according to the present invention that they can be easily dispersed with relatively low shear forces and low energy input to yield uniform dispersions with finely dispersed pigment particles in different application media. In particular, the solid pigment preparations of the present invention can be dispersible in both aqueous and organic solvent-based media or resinous media. They can for example be dispersible in water and organic solvents such as alcohols, for example ethanol, polymeric resins such as acrylic resins, hydrocarbons such as xylene, glycols, esters such as butyl acetate and combinations of any of the foregoing. Dispersion can for example be achieved by means of bead mills, ultrasound, stirring and mixing elements, dissolvers, shaker mixers, such as a Skandex mixer, rotor-stator dispersing assemblies, such as an Ultra-Turrax, or high-pressure homogenizers. For example, the solid pigment preparations according to the present invention may typically be dispersed in an aqueous medium and/or an organic solvent-based medium using a Pendraulik LR 34 dissolver with a dispersing disc having a diameter of 40 mm at 4000 rpm within less than 30 min to yield a homogeneous dispersion having a fineness of grind below 5 μm. The particle size of the obtained dispersions can be determined with a grindometer according to DIN EN ISO 1524:2013.

Accordingly, the present invention relates also generally to the use of a combination of (i) an amine-functional acrylic block copolymer and (ii) an amine-functional polymeric dispersant comprising a polyoxyalkylene moiety for dispersing pigments.

In view of the foregoing, it is also drawn towards dispersions comprising (a) at least one pigment, (b) an amine-functional acrylic block copolymer, (c) an amine-functional polymeric dispersant comprising a polyoxyalkylene moiety, and (d) a liquid aqueous or organic solvent-based carrier medium. The pigment(s) are herein generally dispersed in the carrier medium, which forms a continuous phase. Such dispersion can for example be obtained by the above described process for producing a solid pigment preparation according to the present invention before the drying step or by (re-)dispersing a solid pigment preparation of the present invention in an aqueous or organic solvent-based medium.

It will be appreciated that the characteristics described above for the solid pigment preparation, especially of the amine-functional acrylic block copolymer, the amine-functional polymeric dispersant comprising a polyoxyalkylene moiety, and the pigment as well as their respective amounts apply analogously to the dispersions according to the present invention. The dispersions of the present invention can likewise comprise any one of the optional components described above with reference to the solid pigment preparations of the present invention.

The dispersions according to the present invention are typically stable and do not show appreciable degradation such as flocculation, agglomeration or an adverse impact on their application properties also over extended periods of time, typically exhibiting good storage stability. Herein, the term "storage stability" refers to dispersions which show no noticeable degradation even after accelerated storage conditions at 60°C for 16 h.

The solid pigment preparations and related dispersions of the present invention can in particular be used to color or tint a material.

The present invention thus relates also to a process for coloration of a material, which comprises incorporating a solid pigment preparation or dispersion according to the present invention as described above in said material.

The material to be colored is not particularly limited and may be any condensed phase material. Suitable materials which can be colored making use of the pigment preparations or dispersions according to the present invention include paints such as paints for building exteriors and building interiors, e.g. wood paints or emulsion paints; coating systems such as architectural coatings, industrial coatings, automotive coatings, radiation-curable coatings; printing inks such as offset printing inks, flexographic printing inks, toluene gravure printing inks, textile printing inks, radiation curable printing inks; emulsion and varnish colors; adhesives; and plastics such as casein plastics, phenolic resins, urea resins, thiourea resins, melamine resins, acrylic resins, allylic resins, silicone, polyimide, polybenzimidazole, polyamide, polycarbonate, polyester, polyphenylene oxide, polysulfone, polyvinyl acetate, polyolefins, polyvinyl chloride, polymethyl methacrylate, polyacrylonitrile, polystyrene or epoxy resins.

Incorporation of the pigment preparation or dispersion of the present invention into the material to be colored may be performed according to any suitable known technique. It may comprise for example stirring, shaking, extrusion, for example using a single- or twinscrew extruder, rolling, kneading, grinding, or a combination of any of the foregoing.

Preferably, the material to be colored is fluid and the incorporating comprises stirring the pigment preparation in the fluid material. Stirring is to be understood as meaning any kind of mixing using minimal shearing forces, also including shaking for example. Herein, the term "fluid" relates to a liquid material that can flow, has no fixed shape and is able to move and change shape without separating when under pressure.

Accordingly, the present invention relates also to a colored material obtainable according to the afore-mentioned process for coloration of a material. The colored material may in particular be a waterborne, solvent borne or 100% solids paint, coating or ink composition. Herein, the term "100 % solids" refer to compositions which are substantially free of solvents such as powder coating compositions. The term "waterborne" is used herein interchangeably with the term "aqueous" and means the material composition contains solids dissolved or dispersed in water and optionally one or more organic solvents or liquid carriers, with water representing the majority by weight (>50 wt.%) of the solvents of such material composition. The terms "solvent-borne" or "organic solvent-based" or alike as used herein refer to a medium or material that comprises one or more organic solvents and optionally water, with the organic solvent(s) representing the majority by weight (>50 wt.%) of the solvents of such medium or material composition. Non-limiting examples of organic solvents include monohydric or polyhydric alcohols, glycol ethers, ketones, e.g. methyl ethyl ketone, amides, e.g. N-methyl-pyrrolidone and dimethylformamide, esters, e.g. ethyl acetate, butyl acetate and methoxypropyl acetate, or aromatic or aliphatic hydrocarbons, e.g. xylene, mineral oil and mineral spirits.

It will be understood that the formulation of the colored materials may involve the use of further ingredients common in the art of formulating such materials for the respective purpose and application. For example, the formulation of a paint, coating composition or ink may comprise the use of a grind vehicle. The use of such additional ingredients will be familiar to a person skilled in the art and is therefore not described herein in more detail.

The solid pigment preparations or dispersions according to the present invention may provide favorable color characteristics to media into which they are incorporated, such as a high color intensity and/or jetness. Moreover, the color characteristics imparted by one and the same pigment preparation to different media such as aqueous systems and solvent-borne systems are typically comparable. Thus, dried films derived from coating systems that include a dispersed solid pigment preparation of the present invention, irrespective whether aqueous or organic-solvent based, may for example have may have a jetness of $M_Y$ of $\geq 200$, preferably $\geq 220$, more preferably $\geq 260$, even more preferably

$\geq$ 280, most preferably $\geq$ 300 and/or an undertone dM of $\geq$ 0, preferably > 0, such as $\geq$ 5 or $\geq$ 10. The dried films derived from different coating systems that include one and the same dispersed solid pigment preparation of the present invention, for example an aqueous and an organic-solvent based coating system, may exhibit comparable color characteristics such as having a comparable jetness with delta $M_Y$ < 60, preferably < 50, more preferably < 40, even more preferably < 30, most preferably < 20, and in particular < 15. Delta $M_Y$ corresponds to the positive value of the difference of the jetness values $M_Y$ determined for films derived from two different coating systems that include one and the same dispersed solid pigment preparation of the present invention. The afore-mentioned color characteristics can be determined using a spectrophotometer as described in the Examples. The afore-mentioned numerical values of color characteristics such as jetness $M_Y$, undertone dM and delta $M_Y$ can in particular be determined using the Reference Aqueous Coating System and Reference Organic Solvent-based Coating System with a solid pigment preparation according to the present invention as described in the Examples below. The reference coating systems serve to illustrate typical characteristics obtainable for the pigment preparations of the present invention when used for coloring aqueous media or organic solvent-based media, respectively.

Dried films can be derived from a water- or solvent-based coating composition that comprises a dispersion of a pigment preparation according to the present invention by any suitable film forming technique known in the art. For example, the dispersion can be applied to a surface of a substrate, such as a glass substrate, by means of a film drawing bar with uniform tension and pressure. Subsequently, the wet coating film on the substrate may be dried, for example by flashing at room temperature (20 °C) for 5 min to 120 min, preferably for 10 min to 60 min, more preferably for 15 min to 30 min, and/or subjecting the coated substrate to drying at elevated temperature such as 80 °C for 5 min to 120 min, preferably for 10 min to 60 min, more preferably for 15 min to 30 min.

Having generally described the present invention above, a further understanding can be obtained by reference to the following examples. These examples are provided herein for purposes of illustration only, and are not intended to limit the present invention, which is rather to be given the full scope of the appended claims including any equivalents thereof.

Examples

All parts and percentages indicated throughout the Examples refer to weight, unless specified otherwise.

**Employed Materials**

Pigments:

Colour Black FW 255    Oxidized furnace black (STSA: about 370 m²/g, OAN: about 108 mL/100g, volatiles content: about 12.5 wt.%), (commercially available from Orion Engineered Carbons GmbH)

Dispersants:

Dispersant A    Amine-functional acrylic block copolymer having an amine value of 40 mg KOH/g (commercially available under the Efka® PX product line from BASF SE)

Dispersant B    Amine-functional polyoxyalkylene-containing dispersant having an amine value of 19 mg KOH/g (commercially available under the BYKJET product line from BYK-Chemie GmbH)

Dispersant C    ethoxylated $C_{16}$-$C_{18}$ alcohol (commercially available from KLK OLEO Europe)

Dispersant D    Solvent- and alkylphenol ethoxylate (APE)-free concentrate of a fatty acid derivative (commercially available as TEGO® Dispers 652 from Evonik Resource Efficiency GmbH)

Further substances:

TEGO® Foamex 830    Organic polymer, silicone-free defoamer containing fumed silica (commercially available from Evonik Resource Efficiency GmbH)

Surfynol® 104E    Wetting agent and molecular defoamer (commercially available from Evonik Resource Efficiency GmbH)

| BYK®-024 | Volatile organic (VOC)-free silicone-containing defoamer (commercially available from BYK-Chemie GmbH) |
|---|---|
| AMP 90™ | 2-amino-2-methyl propanol (commercially available from Angus Chemie) |
| DMEA | Dimethylethanolamine |
| TEGO® WET 280 | Liquid polyether siloxane copolymer (commercially available from Evonik Resource Efficiency GmbH) |
| ALBERDINGK® U 9800 | Solvent-free aliphatic polyester polyurethane dispersion (commercially available from Alberdingk Boley, Inc.) |
| Degalan® VP 4157L | Acrylic resin (commercially available from Evonik Resource Efficiency GmbH) |
| Vestanat® HB 2640 MX | Combination of aliphatic polyisocyanate and biuret of hexamethylene diisocyanate (75 %) (commercially available from Evonik Resource Efficiency GmbH) |
| Baysilone® OL 17 | Polyether modified polysiloxane (100%) (commercially available from OMG Borchers GmbH) |

## Preparation of solid pigment preparations

A) Preparation of aqueous dispersions

Aqueous dispersions were prepared as set forth below using the ingredients indicated in Table 1 in amounts corresponding to the given weight percentages.

Table 1

| Ingredient [wt.%] | Example | | | | | | | | |
|---|---|---|---|---|---|---|---|---|---|
| | 1 | 2 | 3 | 4 | 5 | 6 | 7 | 8 | 9 |
| Coulour Black FW 255 | 15.0 | 15.0 | 15.0 | 15.0 | 15.0 | 20.0 | 20.0 | 20.0 | 20 |
| Dispersant A | - | - | 15.0 | - | 7.5 | 6.0 | 4.0 | 5.0 | 2.0 |
| Dispersant B | - | - | - | 15.0 | 7.5 | 14.0 | 16.0 | 15.0 | 18.0 |
| Ratio Dispersant A: Dispersant B | - | - | - | - | 50:50 | 30:70 | 20:80 | 25:75 | 10:90 |
| Dispersant C | 13.5 | - | - | - | - | - | - | - | - |
| Dispersant D | - | 15.0 | - | - | - | - | - | - | - |
| TEGO® Foamex 830 | - | 0.7 | 0.62. | 0.62 | 0.62 | - | - | - | - |
| Surfynol® 104E | 1.0 | 1.0 | 1.0 | 1.0 | 1.0 | 0.87 | 0.87 | 0.9 | 0.9 |
| AMP 90™ | 1.0 | 1.0 | 0.78 | 0.78 | 1.0 | 1.0 | 1.88 | 1.5 | 1.5 |
| Water | 69.5 | 67.3 | 67.6 | 67.6 | 67.38 | 58.13 | 57.25 | 57.6 | 57.6 |
| Total | 100 | 100 | 100 | 100 | 100 | 100 | 100 | 100 | 100 |

Example 1 (Comparative Example)

Dispersant C was dissolved in water and Surfynol® 104E and AMP 90™ were added to the solution. Subsequently, the pigment (Colour Black FW 255) was added and the resulting mixture stirred until the entire amount of pigment was wetted. A pre-dispersion was formed by dispersing the mixture with a Pendraulik LR 34 dissolver for 5 min at 4000 rpm using a dispersing disc having a diameter of 40 mm. Subsequently, 540 g of steel beads, diameter 3 mm, were added to the pre-dispersion and the pre-dispersion was ground using a Skandex disperser BA-S20 for 60 min.

Example 2 (Comparative Example)

Dispersant D was dissolved in water and TEGO® Foamex 830, Surfynol® 104E and AMP 90™ were added to the solution. Subsequently, the pigment (Colour Black FW 255) was added and the resulting mixture stirred until the entire amount of pigment was wetted. A pre-dispersion was formed by dispersing the mixture with a Pendraulik LR 34 dissolver for 5 min at 4000 rpm using a dispersing disc having a diameter of 40 mm. Subsequently, 540 g of steel beads, diameter 3 mm, were added to the pre-dispersion and the pre-dispersion was ground using a Skandex disperser BA-S20 for 60 min.

Example 3 (Comparative Example)

Dispersant A was dissolved in water and TEGO® Foamex 830, Surfynol® 104E and AMP 90™ were added to the solution. Subsequently, the pigment (Colour Black FW 255) was added and the resulting mixture stirred until the entire amount of pigment was wetted. A pre-dispersion was formed by dispersing the mixture with a Pendraulik LR 34 dissolver for 5 min at 4000 rpm using a dispersing disc having a diameter of 40 mm. Subsequently, 540 g of steel beads, diameter 3 mm, were added to the pre-dispersion and the pre-dispersion was ground using a Skandex disperser BA-S20 for 60 min.

Example 4 (Comparative Example)

The experimental procedure was as in case of example 3 expect that Dispersant B was used instead of Dispersant A.

The dispersion of example 4 showed a relatively fast sedimentation.

Example 5

Dispersant A was premixed in water and added to Dispersant B. TEGO® Foamex 830, Surfynol® 104E and AMP 90™ were added to the solution. Subsequently, the pigment (Colour Black FW 255) was added and the resulting mixture stirred until the entire amount of pigment was wetted. A pre-dispersion was then formed by dispersing the mixture with a Pendraulik LR 34 dissolver for 5 min at 4000 rpm using a dispersing disc having a diameter of 40 mm. Subsequently, 540 g of steel beads, diameter 3 mm, were added to the pre-dispersion and the pre-dispersion was ground using a Skandex disperser BA-S20 for 60 min.

Examples 6-9

Dispersant A was premixed in water and added to Dispersant B in the respective indicated relative amounts. Surfynol® 104E and AMP 90™ were then added to the solution. Subsequently, the pigment (Colour Black FW 255) was added and the resulting mixture stirred until the entire amount of pigment was wetted. A pre-dispersion was then formed by dispersing the mixture with a Pendraulik LR 34 dissolver for 5 min at 4000 rpm using a dispersing disc having a diameter of 40 mm. Subsequently, 540 g of steel beads, diameter 3 mm, were added to the pre-dispersion and the pre-dispersion was ground using a Skandex disperser BA-S20 for 60 min.

B) Spray drying

The aqueous dispersions according to Examples 1 to 9 were spray dried using a Buchi B290 Spray Dryer. The dispersion was conveyed to the spraying nozzle by means of a peristaltic pump and drying took place at an inlet temperature of 105-180 °C and an outlet temperature of about 68 °C. The obtained solid pigment preparations were collected via a cyclone at the outlet.

Any clogging or blocking at the spray nozzle was noted to subjectively assess spray dryability.

**Evaluation of the prepared solid pigment preparations**

Re-dispersibility in water

Re-dispersibility in water was investigated by dispersing the spray dried solid pigment preparations according to Examples 1-9 in water with a Pendraulik LR 34 dissolver for 30 min at 4000 rpm using a dispersing disc having a diameter of 40 mm and determining the fineness of grind for the obtained dispersions. The ratio of deionized water to solid pigment preparation was selected herein so as to give a concentration of 13 wt.% of pigment.

Re-dispersibility in organic solvent

Re-dispersibility in organic solvent was investigated by dispersing the spray dried solid pigment preparations according to Examples 1-9 in butyl acetate with a Pendraulik LR 34 dissolver for 30 min at 4000 rpm using a dispersing disc having a diameter of 40 mm and determining the fineness of grind for the obtained dispersions. The ratio of the organic solvents to the solid pigment preparation was selected herein so as to give a concentration of 8.23 wt.% of pigment in the resulting solvent-borne dispersion.

The particle size of the thus obtained dispersions was determined with a grindometer by the method according to DIN EN ISO 1524:2013. Re-dispersibility in water or the organic solvent, respectively, was rated to be good, if the fineness of grind was below 5 $\mu$m. The obtained results are indicated in Table 2 below.

Preparation of aqueous coating composition ("Reference aqueous coating system")

a) Preparation of aqueous dispersions from the solid pigment preparations of Examples 1 to 9:

A Skandex dispersing beaker (180 mL, diameter 5.3 cm, height 12.5 cm) is charged with deionized water, and one of the solid pigment preparations 1 to 9 is stirred in with a spatula. Subsequently, dispersing using a Pendraulik LR 34 dissolver at 4000 rpm for 30 min using a dispersing disc having a diameter of 40 mm is carried out. The ratio of deionized water to solid pigment preparation is selected so as to give a concentration of 13 wt.% of pigment.

b) Preparation of reference lacquer A:

The reference lacquer A is produced as follows:

| Formulation of reference lacquer A | |
| --- | --- |
| ALBERDINGK® U 9800 | 75.8 g |
| Butyl glycol | 13.0 g |
| BYK®-024 | 0.6 g |
| TEGO® WET 280 | 0.4 g |
| DMEA | 0.2 g |
| Deionized water | 10.0 g |
| Total | 100,0 g |
| Non-volatile content | 26.5 % |

The ALBERDINGK® U 9800 is added to a vessel and stirred by a Pendraulik LR 34 dissolver. The Butyl glycol, BYK®-024, TEGO® WET 280, DMEA and deionized water are premixed and added to the ALBERDINGK® U 9800. The mixture is dispersed at 1000 rpm using a dispersing disc having a diameter of 40 mm. Subsequently, the mixture is homogenized for 5 min at 1500 rpm. After the preparation of the reference lacquer, the reference lacquer is left overnight.

The quality of the reference lacquer A is controlled by applying the reference lacquer A onto a glass plate (130 x 90 x 1 mm) and drawing down the reference lacquer A with a film drawing bar having a slot height of 200 $\mu$m, wet, with uniform tension and pressure. Care is taken to ensure that there are no air bubbles in the stripe of the reference lacquer A. The film drawing bar is placed over the stripe of the reference lacquer A and drawn uniformly across the plate. A drawdown is produced which is approximately 10 cm long and 6 cm wide.

After the drawdown procedure, the wet coating film on the glass plate is flashed off at room temperature (20 °C) for 15 min and then the coated glass plate is dried at 60 °C for 15 min.

The coating prepared from the reference lacquer A is checked for defects such as craters, spots, and irregularities. In case of a significant number of defects the reference lacquer is prepared anew for use in the formulation of the subsequently described coating composition.

c) Preparation of aqueous coating compositions

Aqueous coating compositions were prepared from the aqueous dispersions prepared as set forth above from the solid pigment preparations according examples 1 to 9 and the reference lacquer A.

| Formulation of the aqueous coating compositions | |
| --- | --- |
| Dispersion from solid pigment preparation (Example 1-9) | 2.3 g |
| Reference lacquer A | 17.7 g |
| Total | 20.0 g |
| Pigment concentration (total) | 1.5 % |

The dispersion prepared from the respective solid pigment preparation and the reference lacquer A were weight in the above-indicated amounts into an 80 mL beaker and homogenized vigorously with a spatula until homogeneous to yield the corresponding aqueous coating composition.

Preparation of solvent-borne coating composition ("Reference organic solvent-based coating system")

a) Preparation of organic solvent-borne dispersions from the solid pigment preparations of Examples 1 to 9:

A Skandex dispersing beaker (180 mL, diameter 5.3 cm, height 12.5 cm) is charged with Degalan® VP 4157L and butylacetate in a weight ratio of 60.3:22.5, and one of the solid pigment preparations of Examples 1 to 9 is stirred in with a spatula. Subsequently, dispersing using a Pendraulik LR 34 dissolver at 4000 rpm for 30 min using a dispersing disc having a diameter of 40 mm is carried out. The ratio of the organic solvents to the solid pigment preparation is selected so as to give a concentration of 8.23 wt.% of pigment in the resulting solvent-borne dispersion.

b) Preparation of solvent-borne coating compositions:

Solvent-based coating compositions were prepared from the thus obtained solvent-borne dispersions prepared from the solid pigment preparation of Examples 1 to 9 according to the following formulation:

| Formulation of the solvent-borne coating compositions | |
|---|---|
| Degalan® VP 4157L | 9.5 g |
| Dispersion from solid pigment preparation (Example 1-9) | 5.3 g |
| 2K diluent (89.9 % butyl acetate, 10.0 % butyl glycol acetate, 0.1 % Baysilone® OL 17) | 4.0 g |
| Vestanat® HB 2640 MX | 1.2 g |
| Total | 20 g |
| Pigment concentration (total) | 2.2 % |

The components were weight in the indicated amounts into an 80 mL beaker and homogenized vigorously with a spatula for 10 min to yield the corresponding solvent-borne coating composition.

Preparation of films from the coating compositions

Films were prepared as follows from the aqueous coating compositions prepared from the solid pigment preparations of Examples 1-9 as well as from the solvent-borne coating compositions prepared from the solid pigment preparations of Examples 1-9.

The respective coating composition was applied onto a glass plate (130 x 90 x 1 mm) and drawn down with a film drawing bar having a slot height of 200 $\mu$m (in case of the aqueous coating compositions) or 100 $\mu$m (in case of the solvent-borne coating compositions), wet, with uniform tension and pressure. Care was taken to ensure that there were no air bubbles in the stripe of the coating composition. The film drawing bar is placed over the stripe of the coating composition and drawn uniformly across the plate. A drawdown is produced which is approximately 10 cm long and 6 cm wide.

After the drawdown procedure, the obtained wet coating film on the glass plate was flashed off at room temperature (20 °C) and then the coated glass plate dried at 80 °C for 30 min (in case of the solvent-borne coating compositions) and flashed off at room temperature (20 °C) for 15 min and then dried at 60 °C for 15 min (in case of the aqueous coating compositions).

Coloristic measurements

Coloristic characteristics of the thus obtained films prepared from the aqueous and solvent-borne coating compositions were measured using a Pausch Q - Color 35 spectrophotometer (45°/0° spectrophotometer) and the BCSWIN software. The measurement is made through the glass after calibration with a white calibration tile and a black hollow body. The spectrometer averages over five individual measurements for each sample.

The hue-independent black value $M_Y$ and hue-dependent black value Mc are calculated as follows from the tristimulus (XYZ) data derived from the measurement:

The hue-independent black value $M_Y$ is calculated according to equation 1 from the tristimulus component Y of the measurement (illuminant D65/10°):

$$M_Y = 100 \cdot \log\left(\frac{100}{Y}\right) \qquad\qquad (1)$$

Subsequently, the hue-dependent black value is calculated according to equation 2:

$$M_c = 100 \cdot \log\left(\log\left(\frac{X_n}{X}\right) - \log\left(\frac{Z_n}{Z}\right) + \log\left(\frac{Y_n}{Y}\right)\right) \qquad\qquad (2)$$

wherein $X_n/Z_n/Y_n$ (DIN6147) are tristimulus values of the coordinate origin, based on the illuminant and the observer (DIN5033/ part 7/ illuminant D65/10°) with $X_n = 94.81$ $Z_n = 107.34$ $Y_n = 100.0$.

The absolute hue contribution dM is calculated according to equation 3 from the black values Mc and $M_Y$:

$$dM = M_c - M_Y \qquad\qquad (3).$$

The thus obtained coloristic characteristics in terms of $M_Y$ and dM are reported in Table 2 for the films prepared from the aqueous coating compositions as well as the films prepared from the solvent-borne coating compositions that were prepared from the solid pigment preparations according to Examples 1-9 as set forth above.

The results in Table 2 show that only those solid pigment preparations, which were prepared in accordance with the present invention, were at the same time spray-dryable and easily re-dispersible in water as well as organic solvent, exhibiting comparable coloristic characteristics with a high jetness and similar undertone for films obtained from corresponding water- or solvent-borne coating compositions.

Table 2

| Example | 1 | 2 | 3 | 4 | 5 | 6 | 7 | 8 | 9 |
|---|---|---|---|---|---|---|---|---|---|
| Amount* of pigment in solid pigment preparation [%] | 52.6 | 50.0 | 50.0 | 50.0 | 50.0 | 50.0 | 50.0 | 50.0 | 50.0 |
| Amount** of dispersant based on pigment content [%] | 90 | 100 | 100 | 100 | 100 | 100 | 100 | 100 | 100 |
| Spray dryability | yes | no | no | yes | yes | yes | yes | yes | yes |
| Re-dispersibility in water | yes | no | no | yes | yes | yes | yes | yes | yes |
| Re-dispersibility in solvent | no | no | no | no | yes | yes | yes | yes | yes |
| $M_Y$ (dried film from water) | 324 | - | - | 297 | 277 | 270 | 294 | 302 | 300 |
| dM (dried film from water) | 13.0 | - | - | 9.5 | 7.2 | 10.2 | 10.7 | 12.3 | 10.5 |
| $M_Y$ (dried film from solvent) | - | - | - | - | 319 | 323 | 321 | 301 | 314 |
| dM (dried film from solvent) | - | - | - | - | 12.5 | 11.6 | 12.2 | 10.0 | 11.2 |
| *the amount of pigment is calculated for the dried preparation (without defoamer and base) **the amount of dispersant is based on the total weight of the pigment | | | | | | | | | |

**Claims**

1. A solid pigment preparation comprising:

    (a) at least one pigment;
    (b) an amine-functional acrylic block copolymer; and
    (c) an amine-functional polymeric dispersant comprising a polyoxyalkylene moiety.

2. The solid pigment preparation according to claim 1, wherein the amine functional acrylic block copolymer (b):

- is a copolymer of at least vinylpyridine and one or more acrylate monomer(s), preferably including butylacrylate, and/or
- has an amine value of at least 20 mg KOH/g, preferably at least 30 mg KOH/g, and/or
- has a weight average molecular weight $M_w$ of at least 15,000 g/mol.

3. The solid pigment preparation according to any one of claims 1 or 2, wherein the amine-functional polymeric dispersant (c):

- comprises a polyoxyethylene structure, and/or
- has an amine value of up to 30 mg KOH/g, such as in a range from 5 to 20 mg KOH/g.

4. The solid pigment preparation according to any one of the preceding claims comprising the amine-functional acrylic block copolymer (b) and the amine-functional polymeric dispersant comprising a polyoxyalkylene structure (c) in a total amount in a range from 10-200 wt.%, preferably 50-120 wt.%, more preferably 70-100 wt.%, based on the total weight of the pigment(s) (a).

5. The solid pigment preparation according to any one of the preceding claims comprising the amine-functional acrylic block copolymer (b) and the amine-functional polymeric dispersant comprising a polyoxyalkylene moiety (c) in a weight ratio of from 5:95 to 70:30, preferably from 10:90 to 50:50, more preferably from 10:90 to 25:75.

6. The solid pigment preparation according to any one of the preceding claims, wherein the pigment (a) comprises carbon black, such as an oxidized carbon black, wherein the carbon black preferably has one or more than one or all of the following:

(a) a statistical thickness surface area (STSA) of: $\leq 500$ m$^2$/g, preferably in a range of 200-450 m$^2$/g
(b) an oil absorption number (OAN) of: 50- 150 mL/100 g, preferably in a range of 70-130 mL/100g;
(c) a volatile matter content of: $\leq 25\%$, preferably in a range of 2-15%.

7. The solid pigment preparation according to any one of the preceding claims being a flowable granular composition.

8. The solid pigment preparation according to any one of the preceding claims being dispersible in aqueous as well as organic solvent-based media, preferably yielding a jetness of $M_Y$ of $\geq 200$ and/or an undertone dM of > 0 for dried films obtained from water- and solvent-borne coating compositions that include the dispersed solid pigment preparation, wherein preferably the films derived from the water and solvent-borne coating compositions exhibit a comparable jetness with delta $M_Y < 60$.

9. A process for producing a solid pigment preparation, the process comprising the steps of:

(i) dispersing at least one pigment in an aqueous solution comprising an amine-functional acrylic block copolymer and an amine-functional polymeric dispersant comprising a polyoxyalkylene moiety; and
(ii) drying of the dispersion to form the solid pigment preparation.

10. The process for producing a solid pigment preparation according to claim 9, further comprising adjusting the pH of the dispersion to be in a range of 8.5 to 11.0 prior to drying, such as by addition of a volatile base, preferably an amino alcohol or an aqueous ammonia solution.

11. The process for producing a solid pigment preparation according to any one of claims 9 or 10, wherein the dispersion is dried by spray drying, vacuum distillation, freeze drying, infrared drying, microwave drying, oven drying, drying using a rotating drum dryer or a combination of any of the foregoing, preferably by spray drying.

12. A dispersion comprising:

(a) at least one pigment,
(b) an amine-functional acrylic block copolymer,
(c) an amine-functional polymeric dispersant comprising a polyoxyalkylene structure, and
(d) a liquid aqueous or organic solvent-based carrier medium.

13. A process for coloration of a material, which comprises incorporating a solid pigment preparation according to any one of claims 1 to 8 or a dispersion according to claim 12 in said material, wherein preferably the material is fluid and the incorporating comprises stirring the solid pigment preparation or dispersion in the fluid material.

14. A colored material obtainable according to the process of claim 13, wherein the colored material preferably is a waterborne, solvent borne or 100% solids paint, coating or ink composition.

15. Use of a combination of (i) an amine-functional acrylic block copolymer and (ii) an amine-functional polymeric dispersant comprising a polyoxyalkylene moiety for dispersing pigments.

Europäisches
Patentamt

European
Patent Office

Office européen
des brevets

# EUROPEAN SEARCH REPORT

Application Number

EP 19 16 1226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/045755 A2 (EFKA ADDITIVES B V [NL]; KOK HARM-JAN [NL]; SUURMEIJER MARLEEN [NL]) 3 June 2004 (2004-06-03) * claims 1-7 * ----- | 1-15 | INV. C09D17/00 C09C3/00 C09D5/02 C09B67/00 C09D7/45 |
| Y | WO 2013/148242 A1 (CABOT CORP [US]; GARCIA SANCHEZ ANGELICA MARIA [US] ET AL.) 3 October 2013 (2013-10-03) * paragraph [0036] - paragraph [0038] * * claims 1-9,24,38 * ----- | 1-15 | ADD. C08L53/00 |

TECHNICAL FIELDS
SEARCHED (IPC)

C09D
C09C
C09B
C08L

The present search report has been drawn up for all claims

| Place of search | Date of completion of the search | Examiner |
|---|---|---|
| Munich | 23 August 2019 | Mill, Sibel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## EP 3 705 542 A1

**ANNEX TO THE EUROPEAN SEARCH REPORT
ON EUROPEAN PATENT APPLICATION NO.**

EP 19 16 1226

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2019

| Patent document cited in search report | | Publication date | Patent family member(s) | | Publication date |
|---|---|---|---|---|---|
| WO 2004045755 | A2 | 03-06-2004 | AT | 321605 T | 15-04-2006 |
| | | | AU | 2003279377 A1 | 15-06-2004 |
| | | | BR | 0316418 A | 11-10-2005 |
| | | | CN | 1713955 A | 28-12-2005 |
| | | | DE | 60304354 T2 | 24-08-2006 |
| | | | EP | 1562696 A2 | 17-08-2005 |
| | | | ES | 2260665 T3 | 01-11-2006 |
| | | | JP | 4684654 B2 | 18-05-2011 |
| | | | JP | 2006506491 A | 23-02-2006 |
| | | | KR | 20050070141 A | 05-07-2005 |
| | | | MX | PA05005348 A | 03-08-2005 |
| | | | MY | 134362 A | 31-12-2007 |
| | | | US | 2009234062 A1 | 17-09-2009 |
| | | | WO | 2004045755 A2 | 03-06-2004 |
| WO 2013148242 | A1 | 03-10-2013 | CA | 2868399 A1 | 03-10-2013 |
| | | | CN | 104321390 A | 28-01-2015 |
| | | | EP | 2831181 A1 | 04-02-2015 |
| | | | JP | 5934833 B2 | 15-06-2016 |
| | | | JP | 2015512458 A | 27-04-2015 |
| | | | KR | 20140143201 A | 15-12-2014 |
| | | | US | 2015087764 A1 | 26-03-2015 |
| | | | US | 2016024345 A1 | 28-01-2016 |
| | | | WO | 2013148242 A1 | 03-10-2013 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2234708 B1
- EP 1517934 B2
- EP 1565531 B2
- EP 1913095 B1
- EP 2350210 B9

- WO 9845361 A
- DE 19613796
- DE 19521565
- WO 9842778 A